# EUROPEAN PATENT SPECIFICATION

(11) **EP 2 273 140 B1**
(45) Date of publication and mention of the grant of the patent: **02.09.2015**
(21) Application number: 09724154.1
(22) Date of filing: 27.03.2009
(51) Int. Cl.: F16C 33/78, F16J 15/32, F16J 15/00

(54) **DEVICE WITH SEALS**
VORRICHTUNG MIT DICHTUNGEN
DISPOSITIF À JOINTS

(30) Priority: 28.03.2008 JP 2008088583
(43) Date of publication of application: 12.01.2011
(73) Proprietor: Nabtesco Corporation, Tokyo 105-0022 (JP)
(72) Inventor: NAKAMURA, Koji, Tsu-shi Mie 514-8533 (JP)
(74) Representative: Vossius & Partner Patentanwälte Rechtsanwälte mbB
(86) International application number: PCT/JP2009/056279
(87) International publication number: WO 2009/119801

(56) References cited:
- EP-A1- 1 927 795
- CA-A1- 2 288 230
- DE-C1- 3 610 226
- FR-A1- 2 742 837
- JP-A- 2006 283 981
- JP-A- 2007 046 581
- JP-A- 2007 232 089

## Description

### Technical Field

The present application claims priority to Japanese Patent Application No. 2008-88583 filed on March 28, 2008, the contents of which are hereby incorporated by reference into the present specification. The present invention relates to an apparatus with a seal that encloses a lubricant.

### Background Art

An apparatus, which seals a lubricant between two members that rotate relative to one another, is known. This apparatus comprises, e.g., a case having a circular hole, and a shaft passing through the circular hole. The shaft is positioned coaxially with a center line of the circular hole, and rotates relative to the case. This type of apparatus encloses the lubricant within the case in order to rotate the shaft smoothly. That is, the lubricant is sealed between the two members (the case and the shaft) that rotate relative to one another. In case the shaft is exposed at the outside of the case, an oil seal is provided in a gap between the shaft and an inner circumferential surface of the circular hole of the case in order to prevent the lubricant from leaking from the gap between the case and the shaft. In the present specification, an apparatus comprising an oil seal that seals lubricant is termed an apparatus with a seal. Since the oil seal constantly contacts the shaft, the oil seal deteriorates after long term use. When the oil seal deteriorates, there is a possibility that the lubricant will leak from the interior of the apparatus. Oil, grease, etc. can be given as examples of the lubricant. Below, an example that uses oil will be explained.

A pump that counteracts oil leakage is disclosed in Japanese Patent Application Publication 2007-46581 (Patent Document 1). The pump is an example of the apparatus with a seal referred to in the present specification. The pump comprises a main oil seal and a secondary oil seal. The main oil seal, the inner circumferential surface of which constantly contacts a shaft, seals the oil. The secondary oil seal is placed at a position on the opposite side of the oil and the main oil seal is interposed therebetween. The secondary oil seal is movable along an axis of the shaft. At an initial position, the inner circumferential surface of the secondary oil seal does not contact the shaft. The pump is configured such that, when the secondary oil seal is moved, the inner circumferential surface of the secondary oil seal makes contact with the shaft. When the main oil seal has become impaired, this pump can maintain the sealing of the oil by moving the secondary oil seal. Due to the inclusion of the secondary oil seal, the pump of Patent Document 1 can quickly prevent oil leakage when the main oil seal has become impaired.

Document FR 2 742 837 A1 discloses an apparatus with a seal, which seals lubricant between two members that rotate relative to each other, the apparatus comprising: a first member having a circular hole; a second member passing through the circular hole and configured to rotate relative to the first member; a main oil seal sealing the lubricant and being inserted between an inner circumferential surface of the circular hole and the second member; a secondary oil seal movable along a center line of the circular hole; wherein a groove encircling in a circumferential direction is formed on one of the inner circumferential surface of the circular hole and an outer circumferential surface of the second member, and the groove is positioned on the opposite side of the lubricant, the secondary oil seal is movable from a reserve position, at which position the secondary oil seal opposes the groove and does not contact the member that is formed with the groove, to a sealing position, at which position the secondary oil seal does not oppose the groove and contacts the member that is formed with the groove.

### Summary of Invention

### Technical Problem

The secondary oil seal must be prevented from deteriorating during the time until the main oil seal is impaired. Consequently, in the pump of Patent Document I, the secondary oil seal does not contact the shaft in the initial position. Therefore, a gap exists between the secondary oil seal and the shaft. A gap existing between the secondary oil seal and the shaft means that the inner circumferential surface of the secondary oil seal is exposed. Consequently, foreign material could adhere to the inner circumferential surface of the secondary oil seal. Alternatively, from this gap, foreign material could enter between the main oil seal and the secondary oil seal. When the secondary oil seal makes contact with the shaft, foreign material, which has entered from the gap, could be trapped between the secondary oil seal and the shaft. As a result, there is a risk that the sealing performance between the secondary oil seal and the shaft will degrade.

The techniques taught in the present specification counteract the problem described above, and realizes an apparatus with a seal that does not trap foreign material when a secondary oil seal is utilized.

### Solution to Technical Problem

The apparatus with a seal disclosed in the present specification comprises a secondary oil seal and a dust seal, in addition to a main oil seal. The secondary oil seal is placed at a position on the opposite side of a lubricant and the main oil seal is interposed therebetween. The dust seal is placed at a position on the opposite side of the lubricant and the secondary oil seal is interposed therebetween. The main oil seal and the dust seal may be attached to one of a first member and a second member that rotate relative to one another, and they contact the other of the first member and the second member. For example, the techniques taught in the present specification can be applied to said previously-known apparatus having the shaft passing through the circular hole formed in the case. In this case, the main oil seal and the dust seal may be attached to either one of the case or the shaft, and may contact the other of the case or the shaft.

The apparatus with a seal taught in the present specification will be described more specifically. The apparatus with a seal comprises a first member having a circular hole, and a second member passing through the circular hole. The second member is positioned coaxially with a center line of the circular hole, and rotates relative to the first member. In other words, the first member is positioned coaxially with an axis of the second member, and rotates relative to the second member. In the following description, the center line of the circular hole may be termed an axis of the first member. The lubricant is sealed between the first member and the second member. The main oil seal is inserted between an inner circumferential surface of the circular hole of the first member and an outer circumferential surface of the second member. The main oil seal is attached to one of the first member and the second member, and contacts the other of the first member and the second member. The main oil seal seals the lubricant between the first member and the second member. Consequently, the main oil seal prevents the lubricant from leaking to the outside of the apparatus with a seal. A groove encircling in a circumferential direction is formed on one of the inner circumferential surface of the circular hole of the first member and the outer circumferential surface of the second member, and is positioned on the opposite side of the lubricant, the main oil seal being interposed therebetween.

The apparatus with a seal further comprises the secondary oil seal and the dust seal. The secondary oil seal is placed at a position on the opposite side of the lubricant and the main oil seal is interposed therebetween. The secondary oil seal is not affixed to either the first member or the second member. The secondary oil seal is movable along the center line of the circular hole (the axis of the first member) between a reserve position and a sealing position. In the reserve position, the secondary oil seal opposes the groove formed in one of the inner circumferential surface of the circular hole of the first member and the outer circumferential surface of the second member. Therefore, in the reserve position, the secondary oil seal does not contact the member (the first member or the second member) in which the groove is formed. In the sealing position, the secondary oil seal does not oppose the groove formed in one of the inner circumferential surface of the circular hole and the outer circumferential of the second member. Further, the secondary oil seal contacts the member (the first member or the second member) in which the groove is formed. Initially, i.e., while the sealing performance of the main oil seal is being maintained, the secondary oil seal is positioned at the reserve position. Consequently, the deterioration of the secondary oil seal can be prevented while the sealing performance of the main oil seal is being maintained. In case the main oil seal is impaired or has deteriorated, the secondary oil seal is moved to the sealing position. The apparatus with a seal taught in the present specification can prevent the lubricant from leaking to the outside by moving the secondary oil seal to the sealing position.

As was described above, the apparatus with a seal taught in the present specification comprises the dust seal that is placed at the position on the opposite side of the lubricant and the secondary oil seal is interposed therebetween. In other words, the dust seal is placed at the position on the opposite side of the main oil seal and the secondary oil seal is interposed therebetween. Since this type of dust seal is provided, foreign material does not enter into the secondary oil seal side from the outside of the dust seal when the secondary oil seal is positioned in the reserve position. Foreign material can be prevented from adhering to the periphery of the secondary oil seal and from entering between the main oil seal and the secondary oil seal. When the secondary oil seal has been moved to the sealing position, foreign material can be prevented from being trapped between the secondary oil seal and the member (the first member or the second member) in which the groove is formed.

In the apparatus with a seal taught in the present specification, the main oil seal, the secondary oil seal and the dust seal may all be attached to one of the first member and the second member. Alternatively, one of the main oil seal, the secondary oil seal or the dust seal may be attached to one of the first member and the second member, and the remaining seals may be attached to the other of the first member or second member. The secondary oil seal may be attached to the member, namely the first member or the second member, which does not have the groove formed therein. In the following description, the member, namely the first member or the second member, which has the groove formed therein may be termed a "member having the groove", and the member not having the groove formed therein may be termed a "member without the groove". The term "groove" herein means a groove opposing the secondary oil seal when the secondary oil seal is in the reserve position.

The "oil seal" and "dust seal" both separate a space on both sides of the seals by contacting both of the first member and the second member. Typically, the service life of the dust seal is much longer than the service life of the oil seal. The purpose of the oil seal is to prevent the lubricant from leaking to the outside of the apparatus with a seal, and it is pressed forcefully against the first or second member. Consequently, the oil seal readily deteriorates due to abrasion, etc. By contrast, the purpose of the dust seal is to prevent foreign material from entering the apparatus, and it does not need to be pressed forcefully against the first or second member. Consequently, the dust seal does not deteriorate as readily as the oil seal. Therefore, the dust seal can prevent foreign material from entering from the outside throughout the time until the main oil seal deteriorates to the extent it is unable to continue sealing the oil.

In the apparatus with a seal taught in the present specification, the dust seal may be connected to the secondary oil seal, and may move together with the secondary oil seal. As was described above, the secondary oil seal moves from the reserve position to the sealing position. The secondary oil seal is moved more easily when, rather than being attached directly to the member without the groove, the secondary oil seal is affixed to a support member, etc. and this support member is attached to the member without the groove. Further, the secondary oil seal is easily fixed in a predetermined position (the reserve position or the sealing position). If the dust seal is fixed to the support member, the dust seal also moves together with the secondary oil seal. Due to both of the secondary oil seal and the dust seal being attached to the member without the groove via the support member, etc., the configuration of the apparatus with a seal can be simpler than the case where the secondary oil seal and the dust seal are affixed separately to the member without the groove.

The secondary oil seal and the dust seal may be connected via the support member, etc., but the secondary oil seal and the dust seal may be formed integrally. In case the two are formed integrally, the number of components of the apparatus with a seal can be reduced. Further, in case the secondary oil seal is affixed to the support member, the secondary oil seal and the dust seal, which have been integrally formed, can be fixed to the support member in one step. The manufacturing steps of the apparatus with a seal can be simplified. Furthermore, in the present specification, the oil seal and the dust seal, which have been integrally formed, are termed a "sealing body".

In case the dust seal moves together with the secondary oil seal, when the secondary oil seal moves to the sealing position, the dust seal may be positioned on the opposite side of the lubricant and the groove is interposed therebetween. Alternatively, the dust seal may be positioned closer to the lubricant side than the groove. In other words, when the secondary oil seal moves to the sealing position, the dust seal may be positioned on the opposite side of the main oil seal (or the secondary oil seal) and the groove is interposed therebetween. Alternatively, the dust seal may be positioned between the groove and the main oil seal (or the secondary oil seal). In the former case, the amount of movement of the secondary oil seal can be minimized. In the latter case, the manufacturing precision of the groove does not need to be tightly controlled.

In the apparatus with a seal taught in the present specification, it is preferred that an additional dust seal is positioned between the main oil seal and the secondary oil seal. When the main oil seal has deteriorated, abrasion powder, etc. that has been generated from the main oil seal can be prevented from adhering to the secondary oil seal. Foreign material can be more reliably prevented from being trapped between the secondary oil seal and the member having the groove. Furthermore, the additional dust seal may be formed integrally with the main oil seal, or may be formed separately from the main oil seal. The additional dust seal may also be attached to one of the first member and the second member, and may contact the other of the first member and the second member.

### Effect of Invention

According to the apparatus with a seal taught in the present specification, when the secondary oil seal is moved to the sealing position, foreign material can be prevented from being trapped between the secondary oil seal and the first member, or between the secondary oil seal and the second member. Degradation of the sealing performance of the secondary oil seal can be prevented.

### Brief Description of Drawings

Fig. 1 shows a cross-sectional view of a gear transmission (apparatus with a seal) of a first embodiment.
Fig. 2 shows an enlarged view of a region encompassed by dashed line A of Fig. 1 (reserve position).
Fig. 3 shows a cross-sectional view of a portion encompassed by dashed line A of Fig. 1 as viewed from a different cross-section.
Fig. 4 shows the secondary oil seal of Fig. 2 having been moved to a sealing position.
Fig. 5 shows an enlarged view of a region corresponding to dashed line A of a gear transmission of a second embodiment (reserve position).
Fig. 6 shows a cross-sectional view of a portion corresponding to Fig. 5 as viewed from a different cross-section.
Fig. 7 shows the secondary oil seal of Fig. 5 having been moved to the sealing position.
Fig. 8 shows an enlarged view of a region corresponding to dashed line A of a gear transmission of a third embodiment (reserve position).
Fig. 9 shows a cross-sectional view of a portion corresponding to Fig. 8 as viewed from a different cross-section.
Fig. 10 shows the secondary oil seal of Fig. 8 having been moved to the sealing position.
Fig. 11 shows an enlarged view of a region corresponding to dashed line A of a gear transmission of a fourth embodiment (reserve position).
Fig. 12 shows a cross-sectional view of a portion corresponding to Fig. 11 as viewed from a different cross-section.
Fig. 13 shows the secondary oil seal of Fig. 11 having been moved to the sealing position.

### Description of Embodiments

The embodiments will be described with reference to the drawings. An apparatus with a seal of the respective embodiments is a gear transmission. However, the techniques disclosed in the present specification can also be applied to an apparatus with a seal other than a gear transmission.

### (First Embodiment)

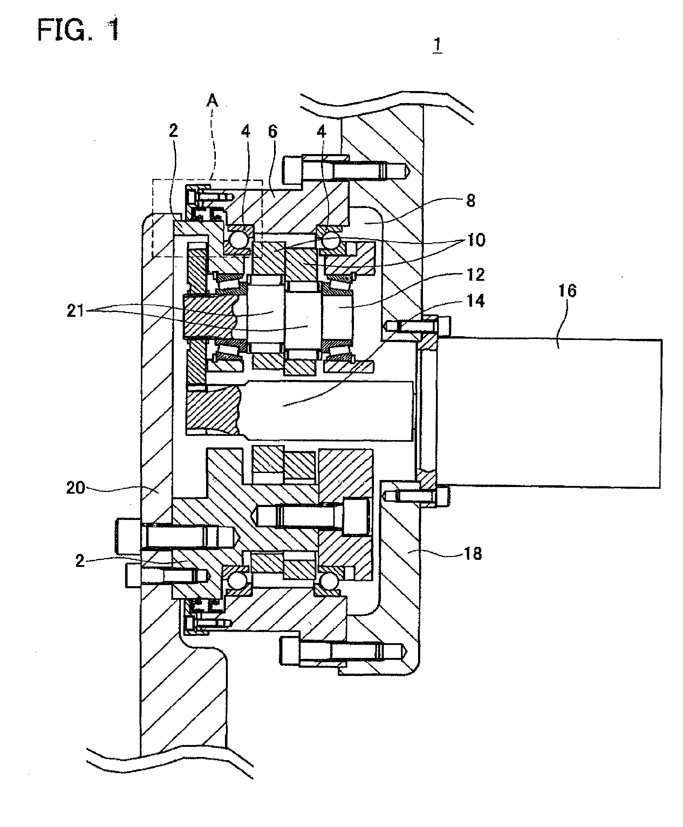

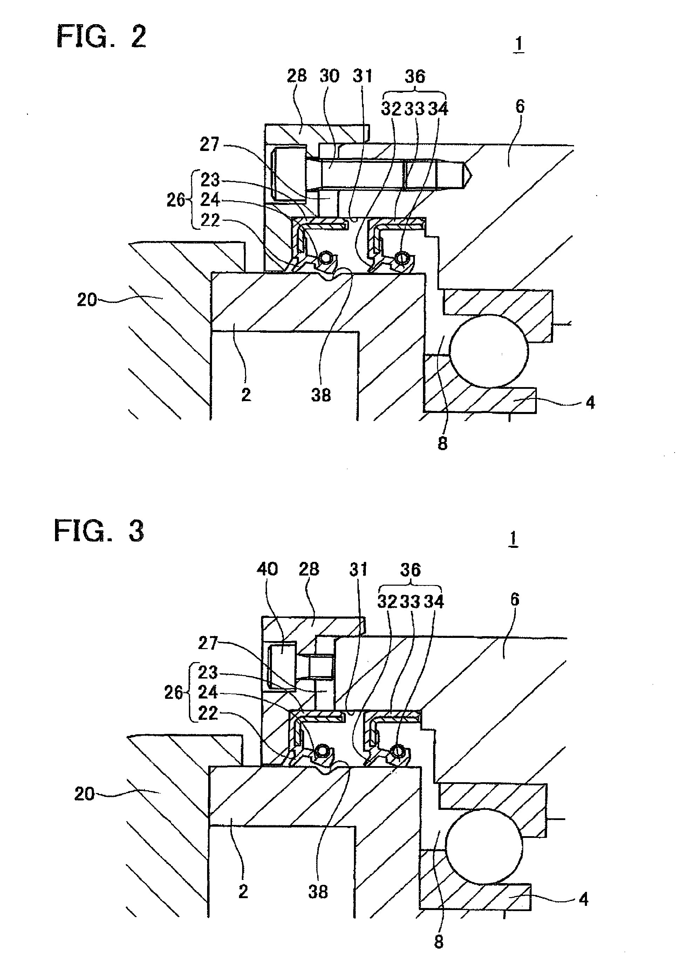

Fig. 1 shows a cross-sectional view of an essential part of gear transmission I of the present embodiment. Fig. 2 shows an enlarged view of the region encompassed by dashed line A of Fig. 1. Moreover, in order to clarify the figures, cross-hatching is omitted from some components. The gear transmission 1 will first be described in a summary manner. The gear transmission 1 is an eccentric oscillating-type speed reducer, and its basic configuration is well known. Consequently, the basic configuration of the gear transmission I will be briefly described.

The gear transmission 1 comprises a carrier 2 and a case 6. The case 6 is equivalent to a first member, and the carrier 2 is equivalent to a second member. The carrier 2 is rotatably supported on the case 6 via a pair of angular ball bearings 4. The carrier 2 and the case 6 rotate relative to one another, and lubricant is sealed between the two. As will be described later, a groove that encircles the circumferential direction is formed in the carrier 2. The carrier 2 passes through a through-hole 31 (see Fig. 2) formed in the case 6, and one end of the carrier 2 (the left side end in Fig. 1) is exposed at the outside of the case 6. The through-hole 31 is equivalent to a circular hole.

The carrier 2 comprises an external gear 10 and a crankshaft 12. The external gear 10 is supported so as to be capable of rotating eccentrically with respect to the carrier 2. The external gear 10 meshes with an internal gear formed on an inner circumferential surface of the case 6. Torque from a motor 16 is transmitted to the crankshaft 12 via a motor gear 14. An eccentric body 21 is affixed to the crankshaft 12. The eccentric body 21 engages with the external gear 10. When the crankshaft 12 rotates, the eccentric body 21 rotates eccentrically around the axis of the crankshaft 12. Consequently, the external gear 10 rotates eccentrically around the axis of the internal gear while meshing with the internal gear. When the external gear 10 rotates eccentrically, the external gear 10 rotates with respect to the internal gear (the case 6) in accordance with the difference in the number of teeth of the external gear 10 and the internal gear. The carrier 2 rotates with respect to the case 6 together with the rotation of the external gear 10. In the gear transmission 1, the motor 16 and the case 6 are affixed to a base 18, and the carrier 2 is affixed to a rotating member 20. Consequently, the gear transmission 1 can rotate the rotating member 20 with respect to the base 18.

As described above, in the gear transmission 1, the motor gear 14 and the crankshaft 12, the eccentric body 21 and the external gear 10, the external gear 10 and internal gear, etc., are each respectively engaged. In order to rotate all the components smoothly, lubricant is enclosed in the gear transmission 1. Stated more specifically, a lubricant enclosure space 8 is formed in the interior of the case 6. One end of the carrier 2 is exposed from the case 6 to the outside. Consequently, an oil seal is positioned between the case 6 and the carrier 2 so that the lubricant does not leak from the lubricant enclosure space 8 to the outside of the gear transmission 1.

Next, the oil seal will be described. As shown in Fig. 2, in the gear transmission 1, a first sealing body 36 and a second sealing body 26 are positioned between the case 6 and the carrier 2. The second sealing body 26 is placed at a position on the opposite side of the lubricant enclosure space 8 and the first sealing body 36 is interposed therebetween. The first sealing body 36 comprises a main oil seal 34 and a first dust seal 32, which are integrally formed. The second sealing body 26 comprises a secondary oil seal 24 and a second dust seal 22, which are integrally formed. The secondary oil seal 24 is placed at a position on the opposite side of the lubricant enclosure space 8 and the main oil seal 34 is interposed therebetween. The second dust seal 22 is placed at a positioned on the opposite side of the lubricant enclosure space 8 and the secondary oil seal 24 is interposed therebetween. Moreover, the second dust seal 22 can also be said to be placed at a position on the opposite side of the main oil seal 34 and the secondary oil seal 24 is interposed therebetween. The first sealing body 36 and the second sealing body 26 have the same shape (the same specifications).

Furthermore, the sealing bodies 36, 26 are typically called "oil seals". In situations when the sealing bodies 36, 26 are called "oil seals", the oil seals 34, 24 are called "lip portions (or main lips)" and the dust seals 32, 22 are called "dust lip portions (or auxiliary lips)". That is, the "lip portion" and the "dust lip portion" together may be called the "oil seal". Furthermore, oil seals without the "dust lip portion" also exist. In order to clearly differentiate the member preventing oil leaks from the member preventing the ingress of foreign material, in the present specification, the part typically called the "lip portion" is termed the oil seal, the part typically called the "dust lip portion" is termed the dust seal, and the part typically called the "oil seal" is termed the sealing body.

The first sealing body 36 is attached via a fitting portion 33 to an inner circumferential surface of the through-hole 31 of the case 6. Accordingly, the main oil seal 34 is inserted into the inner circumferential surface of the through-hole 31 of the case 6. The inner circumferential surface of the main oil seal 34 constantly contacts the carrier 2. Oil is prevented from leaking from the lubricant enclosure space 8 to the outside of the gear transmission 1 by the main oil seal 34. That is, the lubricant is sealed within the gear transmission 1 by the main oil seal 34. The first dust seal 32 will be described later.

The second sealing body 26 is attached via a fitting portion 23 to a support member 28. Since the support member 28 is attached to the case 6 by a bolt 30, the secondary oil seal 24 (the second sealing body 26) can be said to be attached to the case 6 via the support member 28. In Fig. 2, the secondary oil seal 24 is positioned at a position (reserve position) opposing a groove 38 that is formed encircling the circumferential direction of the carrier 2. In the reserve position, the inner circumferential surface of the secondary oil seal 24 does not contact the carrier 2. The secondary oil seal 24 moves along the axis of the carrier 2. The movement of the secondary oil seal 24 will be described later.

Fig. 3 shows a cross-sectional view of the portion encompassed by dashed line A of Fig. 1 as viewed from a cross-section different from Fig. 1. As shown in Fig. 3, a spacer bolt 40 is fastened to the support member 28. The tip of the spacer bolt 40 contacts the case 6, thereby forming a gap 27 between the support member 28 and the case 6. The position of the second sealing body 26 is fixed by the bolt 30 (see Fig. 2) and the spacer bolt 40. In other words, the secondary oil seal 24 is positioned at a position (reserve position) opposing the groove 38 without the inner circumferential surface of the secondary oil seal 24 making contact with the carrier 2. Moreover, although not shown, a plurality of the bolts 30 and spacer bolts 40 are attached in the circumferential direction of the gear transmission 1. Consequently, the gap 27 is retained at a constant width around the entire circumferential direction of the gear transmission 1.

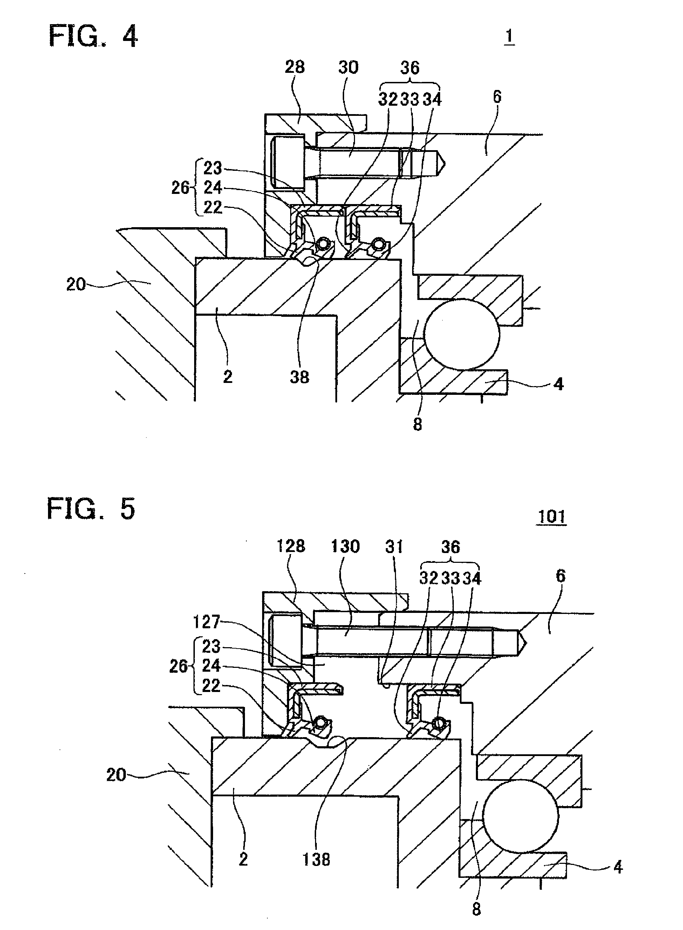

When the spacer bolt 40 is removed from the support member 28, and the bolt 30 is tightened, the support member 28 can be moved along the axis of the carrier 2. Consequently, the secondary oil seal 24 moves to a position (sealing position) where its inner circumferential surface makes contact with the carrier 2. Fig. 4 shows the situation, in which the secondary oil seal is positioned at the sealing position. As shown in Fig. 4, the secondary oil seal 24 and the second dust seal 22 move in the axial direction of the carrier 2. When the secondary oil seal 24 has moved to the sealing position, the second dust seal 22 is placed at a position on the opposite side of the lubricant enclosure space 8 and the groove 38 is interposed therebetween. At both the reserve position and the sealing position, the inner circumferential surface of the second dust seal 22 constantly contacts the carrier 2.

As was described above, the carrier 2 rotates relative to the case 6. Consequently, when the main oil seal 34 is used a long time, the main oil seal 34 deteriorates due to abrasion, and the sealing performance between the main oil seal 34 and the carrier 2 can no longer be maintained. In case the main oil seal 34 has deteriorated in the gear transmission 1, the secondary oil seal 24 is moved from the reserve position to the sealing position. Oil can be prevented from leaking from the lubricant enclosure space 8 by the inner circumferential surface of the secondary oil seal 24 contacting the carrier 2.

When the secondary oil seal 24 has been moved to the sealing position, the sealing performance of the secondary oil seal 24 and the carrier 2 will be reduced if foreign material is trapped between the secondary oil seal 24 and the carrier 2. Alternatively, the service life of the secondary oil seal 24 will be shortened. However, the second dust seal 22 is attached at a position on the opposite side of the main oil seal 34 and the secondary oil seal 24 is interposed therebetween. Consequently, it is possible to prevent foreign material entering from the outside and adhering to the inner circumferential surface of the secondary oil seal 24. Alternatively, the ingress of foreign material between the main oil seal 34 and the secondary oil seal 24 can be prevented. When the secondary oil seal 24 has been moved to the sealing position, it is possible to prevent foreign material from being trapped between the secondary oil seal. 24 and the carrier 2. Consequently, the sealing performance of the secondary oil seal 24 and the carrier 2 is maintained. The sealing performance of the gear transmission I can be maintained over a long period.

Other advantages of the gear transmission 1 will be described. The first dust seal 32 is formed integrally with the main oil seal 34 on the opposite side of the lubricant enclosure space 8 and the main oil seal 34 is interposed therebetween. Consequently, the first dust seal 32 is positioned between the main oil seal 34 and the secondary oil seal 24. Even if the main oil seal 34 abrades, its abrasion powder is prevented by the first dust seal 32 from migrating between the first dust seal 32 and the secondary oil seal 24. The abrasion powder originating from the main oil seal 34 is prevented from being trapped between the secondary oil seal 24 and the carrier 2. That is, the gear transmission 1 comprises the dust seals 32, 22 both between the secondary oil seal 24 and the main oil seal 34, and between the secondary oil seal 24 and the outside (opposite side of the main oil seal 34 with the secondary oil seal 24 interposed therebetween) of the gear transmission 1. The abrasion powder from the main oil seal 34 cannot be counteracted only by positioning the dust seal 22 between the secondary oil seal 24 and the outside of the gear transmission 1. By providing the first dust seal 32, a decrease in the sealing performance of the secondary oil seal 24 and the carrier 2 can be prevented more reliably.

The secondary oil seal 24 and the second dust seal 22 integrally form the second sealing body 26. Consequently, the number of components of the gear transmission I can be reduced. Further, the manufacturing process of the gear transmission 1 can be made simpler than in the case where the secondary oil seal 24 and the second dust seal 22 are attached separately to the support member 28 (or the case 6).

When the secondary oil seal 24 has been moved to the sealing position, the second dust seal 22 is positioned on the opposite side of the lubricant enclosure space 8 and the groove 38 is interposed therebetween (see Fig. 4). Stated more specifically, while the secondary oil seal 24 is moving, the second dust seal 22 continues to make contact with the carrier 2 without ever opposing the groove 38. The secondary oil seal 24 can be moved without a concern that a gap will occur between the second dust seal 22 and the carrier 2. Consequently, the secondary oil seal 24 may simply be moved to a position (the sealing position) that does not oppose the groove 38. The amount of movement of the secondary oil seal 24 can be minimized.

As shown in Figs. 2 and 3, when the secondary oil seal 24 is positioned at the reserve position, a portion of the support member 28 overlaps with the outer circumferential surface of the case 6 as viewed along the radial direction of the gear transmission 1. Since the support member 28 and the case 6 overlap, the support member 28 can move smoothly when the secondary oil seal 24 is moved to the sealing position. Only a narrow gap exists between the portion of the support member 28 and the outer circumferential surface of the case 6. Consequently, the support member 28 can move smoothly, and the ingress of large foreign material into the gap 27 from the outside of the gear transmission 1 can be prevented.

Further, when the secondary oil seal 24 is positioned at the reserve position, the outer circumferential surface of the second sealing body 26 (the outer circumferential surface of the fitting part 23) contacts both the support member 28 and the case 6 in the radial direction. Consequently, the gap 27 and the secondary oil seal 24 are separated. Therefore, minute foreign material, which has entered the gap 27 from the gap of the overlapping portions of the support member 28 and the outer circumferential surface of the case 6, can be prevented from reaching the secondary oil seal 24. The foreign material can be reliably prevented from adhering to the inner circumferential surface of the secondary oil seal 24. Moreover, the outer circumferential surface of the fitting part 23 of the second sealing body 26 is formed from the same resilient material as the secondary oil seal 24, etc.

Further, only a narrow gap exists between the inner circumferential surface of the support member 28 and the outer circumferential surface of the carrier 2. Consequently, the support member 28 can move smoothly, and large foreign material can be prevented from reaching the second dust seal 22 from the outside of the gear transmission 1.

### (Second Embodiment)

Gear transmission 101 of the present embodiment will be described with reference to Figs. 5 to 7. The gear transmission 101 of the present embodiment differs from the gear transmission 1 of the first embodiment only in the region encompassed by dashed line A (see Fig. 1). Consequently, in Figs. 5 to 7, only the region corresponding to dashed line A of the gear transmission I is shown. Further, the same reference number or a reference number having the same two lower digits may be applied to a component that is in common with that of the above-described gear transmission 1, and an explanation thereof may be omitted.

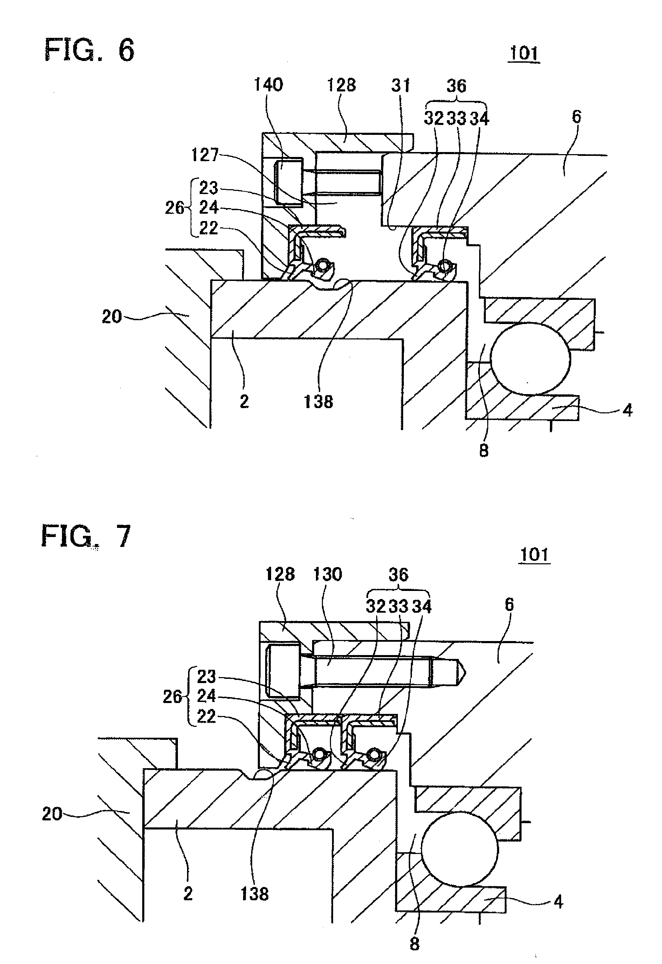

As shown in Fig. 5, when the secondary oil seal 24 is positioned at the reserve position (the position where the inner circumferential surface of the secondary oil seal 24 opposes groove 138), the second dust seal 22 is positioned on the opposite side of the lubricant enclosure space 8 and the groove 138 is interposed therebetween. This is the same as with the gear transmission 1. However, as shown in Fig. 7, when the secondary oil seal 24 has been moved to the sealing position, the second dust seal 22 is positioned closer to the lubricant enclosure space 8 side than the groove 138. That is, the second dust seal 22 moves from a position, at which it contacts the carrier 2 on the opposite side of the lubricant enclosure space 8 and the groove 138 is interposed therebetween, passes over the groove 138, and then moves to a position at which it makes contact with the carrier 2 closer to the lubricant enclosure space 8 side than the groove 138. Consequently, in the gear transmission 101, the displacement distance of the second sealing body 26 is longer than in the gear transmission 1. Since a spacer bolt 140 (see Fig. 6), which is longer than the spacer bolt 40 of the gear transmission 1, is used in the gear transmission 101, the displacement distance of the second sealing body 26 is longer than in the gear transmission 1.

According to the gear transmission 1, in case the second dust seal 22 is positioned on the opposite side of the lubricant enclosure space 8 and the groove 38 is interposed therebetween when the secondary oil seal 24 has been moved to the sealing position, the manufacturing precision of the groove 38 and the positioning precision of the reserve position and the sealing position must be tightly controlled. For example, if the width of the groove 38 (the length in the axial direction of the carrier 2) is too large, the second dust seal 22 will oppose the groove 38 when the secondary oil seal 24 has been moved to the sealing position. Similarly, the second dust seal 22 will also oppose the groove 38, if the positioning precision of the reserve position and the sealing position is not tightly controlled. The second dust seal 22 can no longer continue to make contact with the carrier 2.

However, in the gear transmission 101, when the secondary oil seal 24 has been moved to the sealing position, the second dust seal 22 may be merely positioned closer to the lubricant enclosure space 8 side than the groove 138. Consequently, the manufacturing precision of the groove 138, and the positioning precision of the reserve position and the sealing position need not be tightly controlled. By merely making the spacer bolt 140 longer than the spacer bolt 40 of the gear transmission I, the second dust seal 22 can reliably contact the carrier 2 when the secondary oil seal 24 has been moved to the sealing position.

### (Third Embodiment)

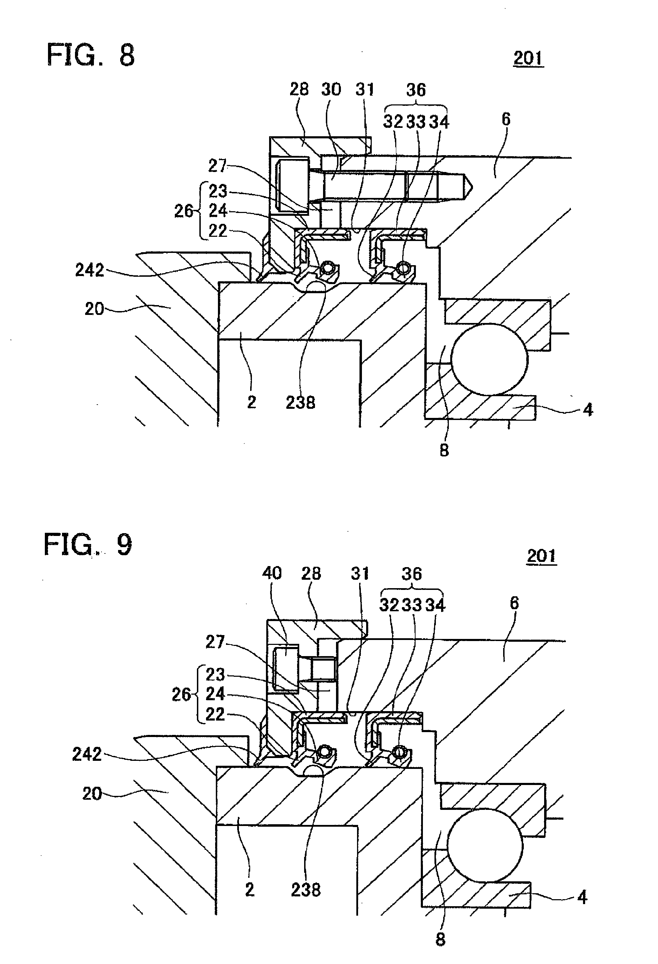

Gear transmission 201 will be described with reference to Figs. 8 to 10. The gear transmission 201 differs from the gear transmission 1 of the first embodiment only in the region encompassed by dashed line A of Fig. 1. Consequently, in Figs. 8 to 10, only the region corresponding to dashed line A of the gear transmission 1 is shown. Further, the same reference number or a reference number having the same two lower digits may be applied to a component that is in common with that of the above-described gear transmission 1, and an explanation thereof may be omitted.

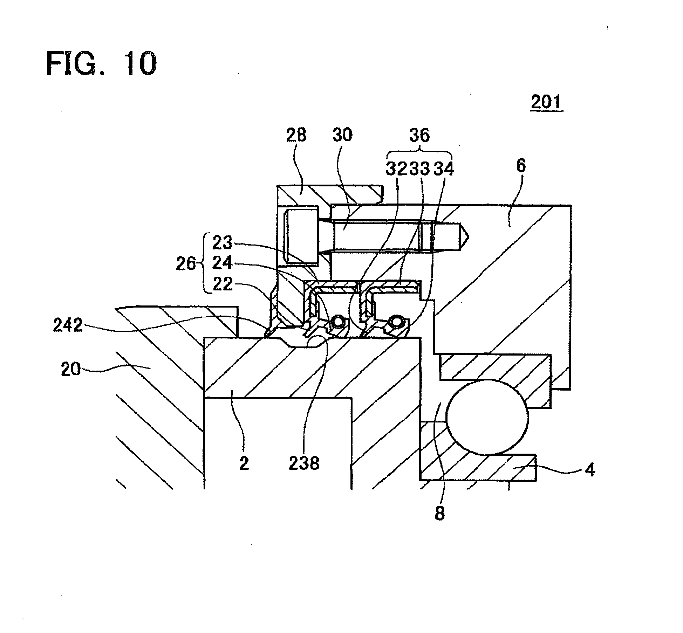

In the gear transmission 201, a third dust seal 242 is attached to the support member 28 on the opposite side of the lubricant enclosure space 8 and the second sealing body 26 is interposed therebetween; the third dust seal 242 contacts the carrier 2. Therefore, the third dust seal 242 is not formed integrally with the secondary oil seal 24. Comparing the gear transmission 201 and the gear transmission 1, the width of a groove 238 (the length in the axial direction of the carrier 2) is larger than the width of the groove 38. Consequently, in the gear transmission 201, when the secondary oil seal 24 is positioned at the reserve position (see Fig. 8), the second dust seal 22 opposes the groove 238. Therefore, the second dust seal 22 does not contact the carrier 2. However, since the third dust seal 242 contacts the carrier 2, foreign material can be prevented from adhering to the inner circumferential surface of the secondary oil seal 24, and can be prevented from entering between the secondary oil seal 24 and the main oil seal 34. Moreover, the third dust seal 242 contacts the carrier even when the secondary oil seal 24 moves to the sealing position (see Fig. 10).

The bolt 30 and the spacer bolt 40 utilized in the gear transmission 201 are identical to those utilized in the gear transmission 1. Consequently, the displacement distance of the secondary oil seal 24 is also identical. In the gear transmission 201, unlike the gear transmission 101, the displacement distance of the secondary oil seal 24 cannot be increased (see Figs. 5, 7). Consequently, if the width of the groove 238 becomes larger, the second dust seal 22 will no longer contact the carrier 2. Foreign material will be trapped between the secondary oil seal 24 and the carrier 2. Since the third dust seal 242 is disposed in the gear transmission 201, ingress of foreign material can be prevented even if the width of the groove 238 becomes larger. Therefore, foreign material can be reliably prevented from being trapped between the secondary oil seal 24 and the carrier 2 even if the manufacturing precision of the groove 238 decreases. Moreover, similar to the gear transmission 1, when the secondary oil seal 24 is positioned at the reserve position, the inner circumferential surface of the second dust seal 22 may contact the carrier 2. After the secondary oil seal 24 has been moved to the sealing position, the inner circumferential surface of the second dust seal 22 may contact the carrier 2. The characterizing feature of the gear transmission 201 is that the third dust seal 242 can prevent the ingress of foreign material even if the second dust seal 22 can not make contact with the carrier 2.

### (Fourth Embodiment)

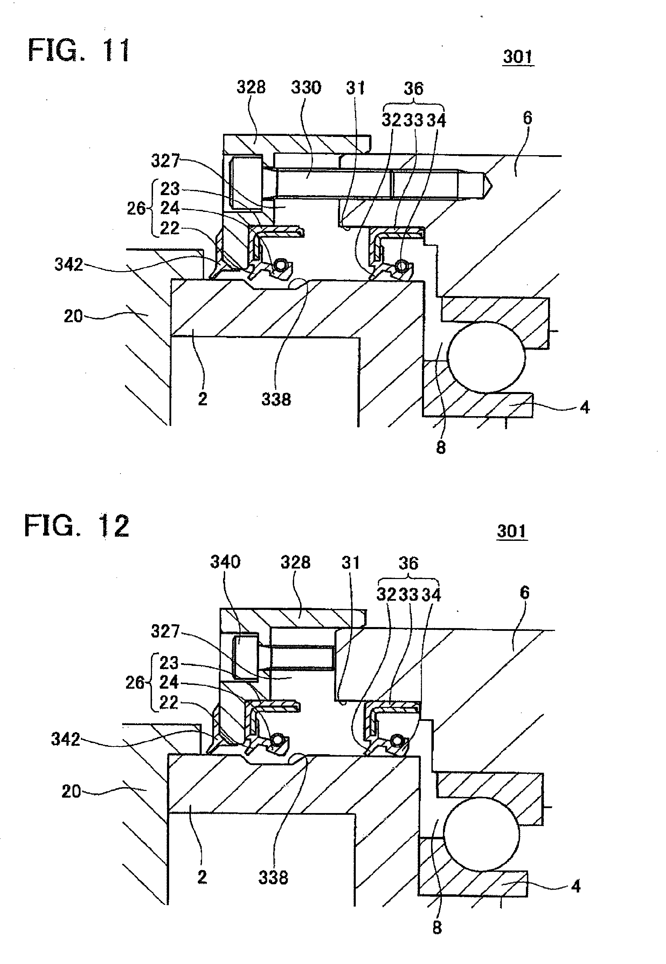

Gear transmission 301 will be described with reference to Figs. 11 to 13. The gear transmission 301 differs from the gear transmission 1 of the first embodiment only in the region encompassed by dashed line A of Fig. 1. Consequently, in Figs. 11 to 13, only the region corresponding to dashed line A of the gear transmission 1 is shown. Further, the same reference number or a reference number having the same two lower digits may be applied to a component that is in common with that of the gear transmission 1, and an explanation thereof may be omitted.

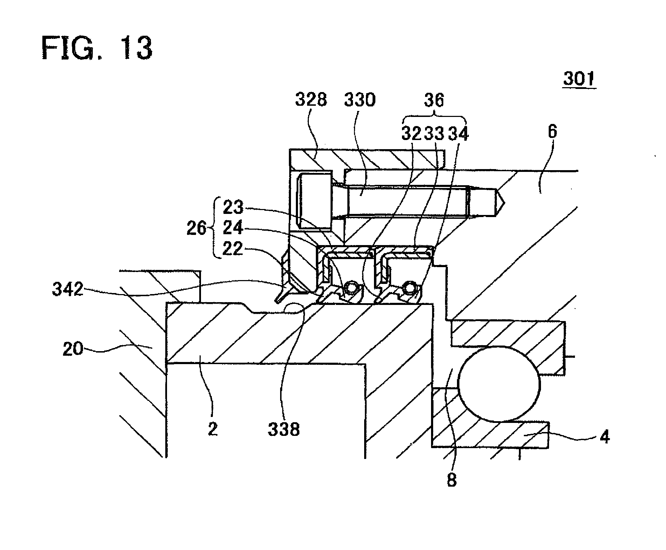

In the gear transmission 301, a third dust seal 342 is attached to a support member 328 on the opposite side of the lubricant enclosure space 8 and the second sealing body 26 is interposed therebetween. When the secondary oil seal 24 is positioned at the reserve position (see Fig. 11), the third dust seal 342 contacts the carrier 2. Consequently, the gear transmission 301 has the same characterizing feature as the gear transmission 201. Comparing the gear transmission 301 and the gear transmission 201, a bolt 330 and a spacer bolt 340 are longer than the bolt 30 and the spacer bolt 40 (see also Figs. 8, 9). Therefore, in the gear transmission 301, the displacement distance of the second sealing body 26 and the third dust seal 342 is longer than in the gear transmission 201. In the gear transmission 301, when the secondary oil seal 24 is positioned in the reserve position, the third dust seal 342 contacts the carrier 2, and the second dust seal 22 does not contact the carrier 2. When the secondary oil seal 24 moves to the sealing position, the second dust seal 22 makes contact with the carrier 2, and the third dust seal 342 does not contact the carrier 2 (see Fig. 13). Different dust seals contact the carrier 2 before and after the secondary oil seal 24 moves from the reserve position to the sealing position. The gear transmission 301 can also be said to be provided with a secondary dust seal (the dust seal 22). After the secondary oil seal 24 has been moved to the sealing position, a dust seal that is not deteriorated can be made to contact the carrier 2.

Modified examples of the above-described embodiments will be described. In the above-described embodiments, the main oil seal, the secondary oil seal and the dust seal are all attached to the case. The main oil seal, secondary oil seal and dust seal may all be attached to the carrier. Moreover, the main oil seal, secondary oil seal and dust seal may each be attached to either the carrier or the case.

Further, in the above-described embodiments, the groove is formed in the carrier. The groove can be formed in the inner circumferential surface of the through-hole (circular hole) of the case. However, the secondary oil seal may be attached to whichever of the carrier and the case does not have the groove formed therein.

In the above-described embodiments, only one main oil seal is disposed between the case and the carrier. Two or more main oil seals may be disposed. Similarly, two or more secondary oil seals may be disposed. Oil leakage from the apparatus with a seal can be prevented more reliably.

Further, in case two or more secondary oil seals are disposed, when one secondary oil seal has been moved to the sealing position, the other secondary oil seal(s) may be positioned at the reserve position. Stated more specifically, when one secondary oil seal has contacted the carrier, the other secondary oil seal(s) may not make contact with the carrier. When the one secondary oil seal has deteriorated, oil leakage can be prevented by utilizing the other secondary oil seal(s). The service life of the apparatus with the seal can be further extended.

In the above-described embodiments, the main oil seal and the first dust seal (the dust seal between the main oil seal and the secondary oil seal) are integrally formed. The first dust seal may be separate from the main oil seal. In this case, when the secondary oil seal has been moved to the sealing position, the first dust seal may be placed at a position that does not make contact with the secondary oil seal. Further, if the second dust seal is attached on the opposite side of the lubricant enclosure space and the secondary oil seal is interposed therebetween, the secondary oil seal and the second dust seal need not be integrally formed.

Specific examples of the present invention are described above in detail, but these examples are merely illustrative and place no limitation on the scope of the patent claims. The technology described in the patent claims also encompasses various changes and modifications to the specific examples described above.

The technical elements explained in the present specification and drawings provide technical utility either independently or through various combinations. The present invention is not limited to the combinations described at the time the claims are filed. Further, the purpose of the examples illustrated by the present specification or drawings is to satisfy multiple objectives simultaneously, and satisfying any one of those objectives gives technical utility to the present invention.

## Claims

1. An apparatus with a seal (1,101,201,301), which seals lubricant between two members that rotate relative to each other, the apparatus (1,101,201,301) comprising:
a first member (6) having a circular hole (31);
a second member (2) passing through the circular hole (31) and configured to rotate relative to the first member (6);
a main oil seal (34) sealing the lubricant and being inserted between an inner circumferential surface of the circular hole (31) and the second member (2);
a secondary oil seal (24) movable along a center line of the circular hole (31) and positioned on an opposite side of the lubricant, the main oil seal (34) being interposed therebetween;
a dust seal (22,242,342) positioned on an opposite side of the lubricant, the secondary oil seal (24) being interposed therebetween;
wherein a groove (38,138,238,338) encircling in a circumferential direction is formed on one of the inner circumferential surface of the circular hole (31) and an outer circumferential surface of the second member (2), and the groove (38,138,238,338) is positioned on the opposite side of the lubricant, the main oil seal (34) being interposed therebetween,
the secondary oil seal (24) is movable from a reserve position, at which position the secondary oil seal (24) opposes the groove (38,138,238,338) and does not contact the member that is formed with the groove (38,138,238,338), to a sealing position, at which position the secondary oil seal (24) does not oppose the groove (38,138,238,338) and contacts the member that is formed with the groove (38,138,238,338), and
the dust seal (22,242,342) is coupled to one of the first member (6) and the second member (2) and contacts another of the first member (6) and the second member (2) without opposing the groove both when the secondary oil seal (24) is positioned at the reserve position and when the secondary oil seal (24) is positioned at the sealing position.

2. The apparatus with a seal according to claim 1, wherein the dust seal (22,242,342) is connected to the secondary oil seal (24) and moves together with the secondary oil seal (24).

3. The apparatus with a seal according to claim 2, wherein the secondary oil seal (24) is integrally formed with the dust seal (22).

4. The apparatus with a seal (1, 201) according to claim 2 or 3, wherein when the secondary oil seal (24) moves to the sealing position, the dust seal (22, 242) is positioned on the opposite side of the lubricant and the groove (38,238) is interposed therebetween.

5. The apparatus with a seal (101, 301) according to claim 2 or 3, wherein when the secondary oil seal (24) moves to the sealing position, the dust seal (22) is positioned closer to a lubricant side than the groove (138,338).

6. The apparatus with a seal (1,101,201,301) according to any one of claims I to 5, further comprising:
an additional dust seal (32) disposed between the main oil seal (34) and the secondary oil seal (24).

## Patentansprüche

1. Vorrichtung mit einer Dichtung (1,101,201,301), die ein Schmiermittel zwischen zwei Elementen abdichtet, die sich relativ zueinander drehen, wobei die Vorrichtung (1,101,201,301) aufweist:
ein erstes Element (6) mit einem kreisförmigen Loch (31);
ein zweites Element (2), das durch das kreisförmige Loch (31) geht und konfiguriert ist, sich relativ zum ersten Element (6) zu drehen;
eine Hauptöldichtung (34), die das Schmiermittel abdichtet und zwischen einer Innenumfangsfläche des kreisförmigen Lochs (31) und dem zweiten Element (2) eingefügt ist;
eine Sekundäröldichtung (24), die längs einer Mittellinie des kreisförmigen Lochs (31) beweglich ist und auf einer gegenüberliegenden Seite des Schmiermittels angeordnet ist, wobei die Hauptöldichtung (34) dazwischen angeordnet ist;
eine Staubdichtung (22,242,342), die auf einer gegenüberliegenden Seite des Schmiermittels angeordnet ist, wobei die Sekundäröldichtung (24) dazwischen angeordnet ist;
wobei eine in Umfangsrichtung umgebende Nut (38,138,238,338) auf der Innenumfangsfläche des kreisförmigen Lochs (31) oder einer Außenumfangsfläche des zweiten Elements (2) ausgebildet ist, und die Nut (38,138,238,338) auf der gegenüberliegenden Seite des Schmiermittels angeordnet ist, wobei die Hauptöldichtung (34) dazwischen angeordnet ist,
wobei die Sekundäröldichtung (24) von einer Reserveposition, in der die Sekundäröldichtung (24) der Nut (38,138,238,338) gegenüberliegt und das Element nicht berührt, das mit der Nut (38,138,238,338) ausgebildet ist, zu einer Dichtungsposition beweglich ist, in der die Sekundäröldichtung (24) der Nut (38,138,238,338) nicht gegenüberliegt und das Element berührt, das mit der Nut (38,138,238,338) ausgebildet ist, und die Staubdichtung (22,242,342) sowohl wenn die Sekundäröldichtung (24) in der Reserveposition angeordnet ist als auch wenn die Sekundäröldichtung (24) in der Dichtungsposition angeordnet ist, mit dem ersten Element (6) oder dem zweiten Element (2) gekoppelt ist und das andere des ersten Elements (6) und des zweiten Elements (2) berührt, ohne der Nut gegenüberzuliegen.

2. Vorrichtung mit einer Dichtung nach Anspruch 1, wobei die Staubdichtung (22,242,342) mit der Sekundäröldichtung (24) verbunden ist und sich zusammen mit der Sekundäröldichtung (24) bewegt.

3. Vorrichtung mit einer Dichtung nach Anspruch 2, wobei die Sekundäröldichtung (24) integral mit der Staubdichtung (22) ausgebildet ist.

4. Vorrichtung mit einer Dichtung (1, 201) nach Anspruch 2 oder 3, wobei wenn sich die Sekundäröldichtung (24) zur Dichtungsposition bewegt, die Staubdichtung (22, 242) auf der gegenüberliegenden Seite des Schmiermittels angeordnet ist und die Nut (38,238) dazwischen angeordnet ist.

5. Vorrichtung mit einer Dichtung (101, 301) nach Anspruch 2 oder 3, wobei wenn sich die Sekundäröldichtung (24) zur Dichtungsposition bewegt, die Staubdichtung (22) näher zu einer Schmiermittelseite angeordnet ist als die Nut (138,338).

6. Vorrichtung mit einer Dichtung (1,101,201,301) nach einem der Ansprüche 1 bis 5, die ferner aufweist:
eine zusätzliche Staubdichtung (32), die zwischen der Hauptöldichtung (34) und der Sekundäröldichtung (24) angeordnet ist.

## Revendications

1. Dispositif à joints (1, 101, 201, 301) pour étanchéifier un lubrifiant entre deux éléments rotatifs l'un par rapport à l'autre, ledit dispositif (1, 101, 201, 301) comprenant :
un premier élément (6) avec un trou circulaire (31) ;
un deuxième élément (2) engagé dans le trou circulaire (31) et prévu pour être rotatif par rapport au premier élément (6) ;
un joint d'huile principal (34) pour étanchéifier le lubrifiant, mis en place entre une surface circonférentielle intérieure du trou circulaire (31) et le deuxième élément (2) ;
un joint d'huile secondaire (24) déplaçable le long d'une ligne centrale du trou circulaire (31) et disposé du côté opposé au lubrifiant, le joint d'huile principal (34) étant intercalé ;
un joint à poussière (22, 242, 342) disposé du côté opposé au lubrifiant, le joint d'huile secondaire (24) étant intercalé ;
où une rainure (38, 138, 238, 338) ménagée dans une direction circonférentielle entoure la surface circonférentielle intérieure du trou circulaire (31) ou une surface circonférentielle extérieure du deuxième élément (2), et où ladite rainure (38, 138, 238, 338) est prévue du côté opposé au lubrifiant, le joint d'huile principal (34) étant intercalé,
le joint d'huile secondaire (24) étant déplaçable d'une position de réserve, où le joint d'huile secondaire (24) est opposé à la rainure (38, 138, 238, 338) et ne contacte pas l'élément formé avec la rainure (38, 138, 238, 338), vers une position de joint, où le joint d'huile secondaire (24) n'est pas opposé à la rainure (38, 138, 238, 338) et contacte l'élément formé avec la rainure (38, 138, 238, 338), et
le joint à poussière (22, 242, 342) étant raccordé au premier élément (6) ou au deuxième élément (2) et contactant l'élémentaire complémentaire au premier élément (6) ou au deuxième élément (2) sans être opposé à la rainure si le joint d'huile secondaire (24) est en position de réserve et aussi si le joint d'huile secondaire (24) est en position de joint.

2. Dispositif à joints selon la revendication 1, où le joint à poussière (22, 242, 342) est raccordé au joint d'huile secondaire (24) et est mobile avec le joint d'huile secondaire (24).

3. Dispositif à joints selon la revendication 2, où le joint d'huile secondaire (24) est formé d'un seul tenant avec le joint à poussière (22).

4. Dispositif à joints (1, 201) selon la revendication 2 ou la revendication 3, où, quand le joint d'huile secondaire (24) se déplace vers la position de joint, le joint à poussière (22, 242) est disposé du côté opposé au lubrifiant et la rainure (38, 238) est intercalée.

5. Dispositif à joints (101, 301) selon la revendication 2 ou la revendication 3, où, quand le joint d'huile secondaire (24) se déplace vers la position de joint, le joint à poussière (22) est plus proche du lubrifiant que la rainure (138, 338).

6. Dispositif à joints (1, 101, 201, 301) selon l'une des revendications 1 à 5, comprenant en outre :
un joint à poussière additionnel (32) disposé entre le joint d'huile principal (34) et le joint d'huile secondaire (24).
